# EUROPÄISCHE PATENTANMELDUNG

(11) **EP 2 098 189 A1**
(43) Veröffentlichungstag der Anmeldung: **09.09.2009**
(21) Anmeldenummer: 09154391.8
(22) Anmeldetag: 05.03.2009
(51) Int. Cl.: A61C 13/20, F27B 17/02

(54) **Dentalofen**

(30) Priorität: 05.03.2008 DE 102008012579
(71) Anmelder: Ivoclar Vivadent AG, 9494 Schaan (LI)
(72) Erfinder: Lorünser, Johannes, 6700, Bludenz (AT); Rohner, Gottfried, 9450, Altstätten (CH); Mauerhofer, Alex, 7304, Maienfeld (AT)
(74) Vertreter: Baronetzky, Klaus

(57) **Zusammenfassung**

Die Erfindung betrifft einen Dentalofen mit einer Heizkammer, mit wenigstens zwei die Heizkammer beaufschlagenden Heizelementen und einer mit den Heizelementen zusammenwirkenden Steuervorrichtung für die Spannungsversorgung der Heizelemente. Die Steuervorrichtung (22) versorgt mindestens zwei Heizelemente (12) separat mit Spannung. Ferner passt die Steuervorrichtung (22) die Leistungsabgabe mindestens eines Heizelements (12) an die Erfordernisse der Temperaturverteilung in der Heizkammer (30) an.

## Beschreibung

Die Erfindung betrifft einen Dentalofen mit einer Heizkammer, gemäß dem Oberbegriff von Anspruch 1.

Ein derartiger Dentalofen muss hinsichtlich des Temperaturverlaufs entlang einer sog. "Brennkurve" exakt gesteuert werden, nachdem typischerweise die Qualität und das Ergebnis des Sinterns stark von der Brennkurve bzw. der Einhaltung der vorgegebenen Genauigkeit abhängt.

Hierzu sind aufwendige Steurvorrichtungen bekannt, die über einen Netztransformator einen TRIAC ansteuern, der über die entsprechende Steuervorrichtung in getakteter Form angesteuert wird.

Ein Beispiel für eine derartige Steurvorrichtung für einen Dentalofen ist aus der DE-OS 3146383 bekann. Bei dieser Steuervorrichtung sollen etwaige Schwankungen der Speisespannungen durch genaue Impulsansteuerungen ausgeglichen werden, um die Spannungsversorgung von Heizelementen möglichst genau zu realisieren.

Der aus der DE 3146383 A1 bekannte Brennofen ist vergleichsweise teuer und schwer, nachdem die Heizleistungen über einen handelsüblichen Transformator zugeführt wird. Ferner ist es an sich bekannt, über sog. primär getaktete Netzteile, die die Größe und das Gewicht des Transformators zu reduzieren, wobei die meist im Frequenzbereich um 50 khz transformierte Wechselspannung dann sorgfältig gleichgerichtet und geglättet werden muss, um Gleichspannungen in der erforderlichen Qualität bereit zu stellen.

Die Erfindung betrifft einen Dentalofen mit einer Heizkammer gemäß dem Oberbegriff von Anspruch 1.

Ein derartiger Dentalofen muss hinsichtlich des Temperaturverlaufs entlang einer sog. Brennkurve exakt gesteuert werden, nachdem typischerweise die Qualität und das Ergebnis des Sinterns stark von der Brennkurve bzw. der Einhaltung der vorgegebenen Genauigkeit abhängt.

Hierzu sind aufwendige Steuervorrichtungen bekannt, die über einen Netztrasformator ein TRIAC ansteuern, der über die entsprechende Steuervorrichtung in getakteter Form angesteuert wird.

Ein Beispiel für eine derartige Steuervorrichtung für einen Dentalofen ist aus der DE-OS 31 46 383 bekannt. Bei dieser Steuervorrichtung sollen etwaige Schwankungen der Speisespannung durch genaue Impulsansteuerung ausgeglichen werden, um die Spannungsversorgung von Heizelementen möglichst genau zu realisieren.

Der aus der DE 31 46 383 A1 bekannte Brennofen ist vergleichsweise teuer und schwer, nachdem die Heizleistung über einen handelsüblichen Trasformator zugeführt wird. Ferner ist es an sich bekannt, über sog. primärgetaktete Netzteile die Größe und das Gewicht des Transformators zu reduzieren, wobei die meist im Frequenzbereich um 50 Kh transformierte Wechselspannung dann sorgfältig gleichgerichtet und geglättet werden muss, um Gleichspannungen in der erforderlichen Qualität bereitzustellen.

In diesem Zusammenhang ist es auch bereits vorgeschlagen worden, bei mehreren Heizkreisen ein gemeinsames primärgetaktetes Netzteil zu verwenden und sekundärseitig eine Regelung der erwünschten Heizleistung vorzusehen.

Typischerweise weisen Brennöfen für dentales Sintermaterial eine Ofenhaube auf, in deren Innenwand mehrere Heizwendeln oder Heizschlangen integriert sind. Derartige Heizwendeln sind meist im Wesentlichen U-förmig aufgebaut, und typischerweise sind zwei bis sechs Heizwendeln vorgesehen. Bei beispielsweise sechs Heizwendeln liegt an jeder Heizwendel 1/6 der Speisespannung an, und alle Heizwendeln werden von dem gleichen Strom durchfloßen.

Andererseits unterliegen Heizwendeln Exemplarstreuungen, die verhindern, dass bei gleichem zugeführten Heizstrom auch exakt die gleiche Heizleistung abgegeben wird.

Um dennoch eine gleichmäßige Temperaturprofil innerhalb der Heizkammer sicherzustellen, ist es bereits vorgeschlagen worden, Heizwendeln auf gleiche elektrische Parameter vorzuselektieren. Dies ist relativ aufwendig, berücksichtigt aber andererseits auch nicht die Möglichkeit, dass Heizwendeln im Betrieb eine Änderung ihrer elektrischen Parameter erfahren, gerade insbesondere bei Hochtemperaturöfen, bei denen der Verschleiß vergleichsweise groß ist.

Die Einzelhandsteuerung von Heizwendeln ist ebenfalls im anderen Zusammenhang bereits bekannt geworden.

Andererseits müssen gerade Dentalbrennöfen unterschiedliches Brenngut verarbeiten. Die zu sinternden Dentalmaterialien sind häufig in gipsförmige Massen eingebetet, wobei sowohl die Größe der eingesetzten Muffel als auch die Menge des für die Dentalrestauration erforderlichen Dentalmaterials in weiten Bereichen schwankt.

Typischerweise haben große Muffel und größere Mengen an Dentalmaterialien insofern eine höhere Wärmekapazität und bedürfen einer intensiveren Aufheizung.

Dennoch zeigte sich bei verschiedenen Versuchen, dass auch bei zugeführter größerer Heizleistung entsprechend der größeren Masse des Brennguts die Brennergebnisse im Vergleich mit kleineren Massen unterschiedlich sind.

Demgegenüber liegt der Erfindung die Aufgabe zu Grunde, einen Dentalofen gemäß dem Oberbegriff von Anspruch 1 zu schaffen, der hinsichtlich der Unempflindlichkeit auf unterschiedliche Brennobjekte verbessert ist, aber dennoch kostengünstig herstellbar ist.

Dies mit dieser Aufgabe wird erfindungsgemäß durch Anspruch 1 gelöst. Vorteilhafte Weiterbildungen ergeben sich aus den Unteransprüchen.

Erfindungsgemäß ist es vorgesehen, mindestens zwei Heizelemente gezielt und unterschiedlich zu steuern, um die Temperaturverteilung in der Heizkammer gezielt so einzustellen, wie dies erwünscht ist.

Beispielsweise ist es bei Heizkammern gemäß dem Stand der Technik üblich, dass eine Temperaturschichtung entsteht, der obere Teil der Heizkammer also heißer als der untere Teil ist. Erfindungsgemäß lässt sich dies dadurch kompensieren, dass untere Heizelemente stärker und obere Heizelemente weniger stark angesteuert werden. Auch unterschiedlichen Massen der Brennobjekte lässt sich erfindungsgemäß besonders günstig Rechnung tragen:

Durch die stärkere Erhitzung unterer Heizelemente entsteht offenbar eine Konvektion in der Heizkammer, die die Temperaturverteilung vergleichmäßigt und gerade bei voluminöseren Brennobjekten den Temperaturausgleich besser als bei den bekannten Brennöfen realisiert.

Erfindungsgemäß besonders günstig ist es, wenn Einzelansteuerungen für die Heizelemente realisiert sind, die die Tatsache ausnutzen, dass für die Primärtaktung von Netzteilen ohnehin elektrische Schaltelemente wie TRIAC eingesetzt werden müssen. Diese Lösung ist gerade bei beispielsweise drei übereinander angeordneten Heizkreisen oder Heizelementen sehr günstig. Die Steuerung über die erfindungsgemäße Steuervorrichtung wird dann in den Primärbereich der Gesamtschaltung verlagert, so dass die dort ohnehin vorgesehenen TRIACs mehrfach einsetzbar sind.

Erfindungsgemäß besonders günstig ist es ferner, wenn Heizelemente, die auf gleicher Höhe angeordnet sind und beispielsweise die Heizkammer im Wesentlichen ringförmig umgeben, mit der gleichen Steuervorrichtung angesteuert werden, wobei es sich aber auch versteht, dass es besonders günstig ist, wenn für jedes Heizelement je eine separate Steuervorrichtung eingesetzt wird, die durchaus auch als Teil einer Gesamt-Steuervorrichtung realisiert werden kann.

Mit Einzel-Steuervorrichtungen lässt sich erfindungsgemäß auch eine vorkalibrierung der Heizelemente realisieren, so dass eine genauere Temperatursteuerung möglich ist.

Auch ist es möglich, für jedes Heizelement den aktuell vorliegenden Widerstand basierend auf dem Quotienten von Spannung und Strom, der sich bekanntlich mit der Temperatur endet, zu erfassen, um so für eine optimierte Ansteuerung zu sorgen.

Die verlustleistung für die Regelung kann durch die Einsparung des zweiten TRIACs innerhalb der Steuervorrichtung mindestens im Halbleiterbereich halbiert werden, so dass sie im Wesentlichen aus dem Spannungsabfall über dem TRIAC und dessen Schaltungsverluste sowie den Verlusten des Übertragers zusammengesetzt ist.

Erfingdungsgemäß ist es auch möglich, im Einzelfall gewünschtenfalls einen Temperaturgradienten in der Heizkammer bereitzustellen. Beispielsweise ist es denkbar, dass in einem großen Brennraum mehrere Muffeln gemeinsam gebrannt werden. In diesem Fall kann es günstig sein, der größten Muffel benachbart die größte Heizenergie bereitzustellen, um insofern Temperaturunterschiede zu kompensieren.

In einer weiteren vorteilhaften Ausführungsform ist es vorgesehen, dass die Heizkammer sich im Wesentlich als Hohlzylinder erstreckt und mindestens zwei Heizelemente übereinander angeordnet und je getrennt von der Steuervorrichtung steuerbar sind.

In einer weiteren vorteilhaften Ausführungsform ist es vorgesehen, dass die Heizkammer als Teil einer Ofenhaube ausgebildet und beim Schließen der Ofenhaube im Wesentlichen geschlossen ist.

In einer weiteren vorteilhaften Ausführungsform ist es vorgesehen, dass die Heizelemente im Bereich der Heizkammerwand verteilt angeordnet sind und insbesondere von einer im Wesentlichen rohrförmigen Abdeckscheibe geschützt sind.

In einer weiteren vorteilhaften Ausführungsform ist es vorgesehen, dass sich die Heizelemente wenigstens teilweise entlang der Heizkammerwand in Umfangsrichtung der Heizkammerwand oder parallel zur Mittellängsachse der Heizkammerwand erstrecken.

In einer weiteren vorteilhaften Ausführungsform ist es vorgesehen, dass mindestens zwei Temperatursensoren den Heizelementen benachbart, jedoch außerhalb der Heizkammer, insbesondere auf der Seite einer Quarzglasabdeckung, auf der die Heizelemente ebenfalls vorgesehen sind, angeordnet sind.

In einer weiteren vorteilhaften Ausführungsform ist es vorgesehen, dass die Heizelemente der Heizkammer eng benachbart als Heizspiralen sich ringförmig oder spiralig um die Heizkammer erstrecken.

In einer weiteren vorteilhaften Ausführungsform ist es vorgesehen, dass die Steuervorrichtung mit mindestens einem Temperatursensor verbunden ist, der in der Heizkammer dem Heizelement benachbart und/oder in der Heizkammer von dem Heizelement beabstandet angeordnet ist.

In einer weiteren vorteilhaften Ausführungsform ist es vorgesehen, dass Heizelemente von der Steuervorrichtung mit identischer oder höherer Leistung versorgt werden.

In einer weiteren vorteilhaften Ausführungsform ist es vorgesehen, dass bei mindestens einer Temperatur in der Heizkammer der Dentalofen kalibriert wird und dass die Ansteuerung der Heizelemente der durch die Steuervorrichtung basierend auf durch Temperatursensoren gemessenen Temperaturen erfolgt, die außerhalb der Heizkammer angeordnet sind, jedoch diese eng benachbart sind.

Gemäß einer alternativen Ausführungsform ist es vorgesehen, anstelle eines Sinterofens einen Mikrowellenofen für die Realisierung des erfindungsgemäßen Dentalofens einzusetzen.

In einer weiteren vorteilhaften Ausführungsform ist es vorgesehen, dass mit dem Sensor eine Temperatur von max. 1600°C messbar ist.

In einer weiteren vorteilhaften Ausführungsform ist es vorgesehen, dass die Steuervorrichtung für die Leistungsversorgung der Heizelemente ein primär getaktetes Netzteil aufweist, wobei insbesondere für jedes oder mehrere Heizelement ein separater Schaltkreis vorgesehen ist, welche von der Steuervorrichtung gemeinsam steuerbar sind.

In einer weiteren vorteilhaften Ausführungsform ist es vorgesehen, dass die Heizelemente mit Gleichspannung beaufschlagt sind, die eine Restwelligkeit von 1% oder weniger, bevorzugt von weniger als 0,1% hat.

In einer weiteren vorteilhaften Ausführungsform ist es vorgesehen, dass die Heizelemente im Wesentlichen aus Molybdän-Siliziumdioxid (MOSi₂) und/oder Silizium-Karbid (SiC) bestehen.

In einer weiteren vorteilhaften Ausführungsform ist es vorgesehen, dass die Heizelemente von Wärmedämrnelementen umgeben sind, die sich an sich bekannter Weise die Heizkammer und die Heizelemente umgebend erstrecken und dass insbesondere die Heizelemente beabstandet und thermisch voneinander getrennt sind.

Weitere Vorteile, Einzelheiten und Merkmale ergeben sich aus der nachstehenden Beschreibung zweier Ausführungsbeispiele anhand der Zeichnung. Es zeigen:
- Fig. 1: ein schematisches Schaltbild eines bereits bekannten Brennofens für Dentalzwecke;
- Fig. 2: ein Schaltbild einer Ausführungsform eines erfindungsgemäßen Brennofens;
- Fig. 3: eine schematische Darstellung der Heizelementanordnung eines erfindungsgemäßen Brennofens; und
- Fig. 4: eine schematische Darstellung einer weiteren Ausführungsform eines erfindungsgemäßen Brennofens, und der Darstellung der Heizelementanordnung.

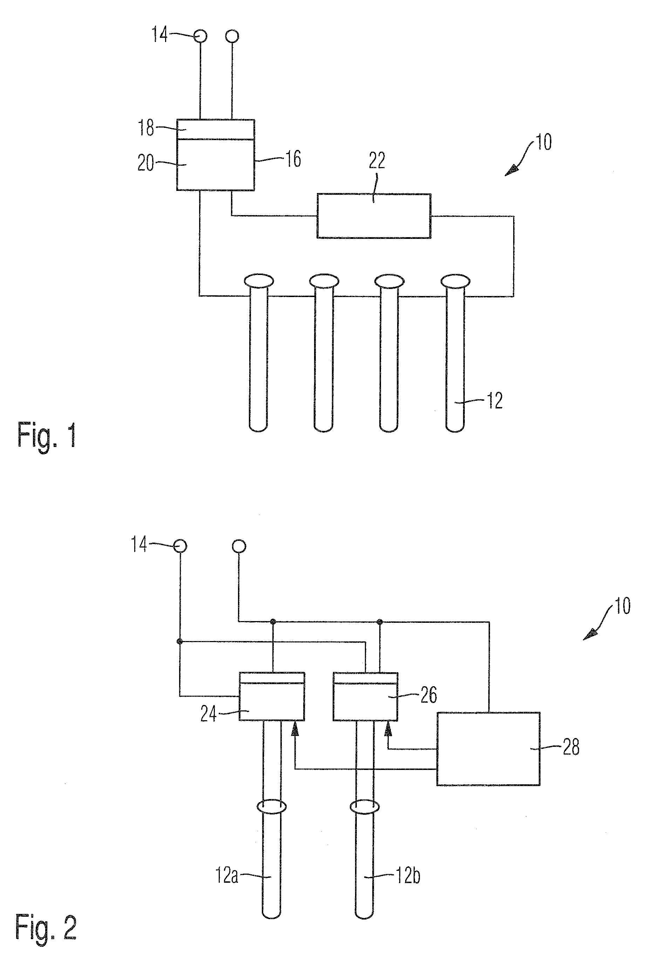

Ein Dentalofen 10 ist in Fig. 1 hinsichtlich seiner Verschaltung schematisch dargestellt. Es handelt sich hier um einen bereits bekannten Dentalofen mit vier Heizelementen 12, die in üblicherweise spiralig oder in ringform einer Heizkammer umgebend angeordnet sind.

Die Heizelemente 12 sind seriell verschaltet. Die Spannungsversorgung erfolgt über Netzanschlüsse 14 und ein Netzteil 16. Das Netzteil 16 kann in üblicherweise mit einem Transformator, einem Gleichrichter und mindestens einem Siebkondensator aufgebaut sein, aber auch als sog. primärgetaktes Netzteil ausgebildet sein, bei welchem ein TRIAC 18 mit einem Hochfrequenzübertrager 20 kombiniert ist. Ein derartiges Netzteil 16 hat einen verbesserten Wirkungsgrad und ist leichter.

Die Steuerung der Heizelemente erfolgt über eine Steuervorrichtung 22, die in Serie mit den Heizelementen 12 verbunden ist, so dass sie von dem Heizstrom durchflossen wird.

Über Temperatursensoren im Innenraum der Ofenhaube lässt sich die von den Heizelementen zuerst abgegebene Heizleistung steuern.

Eine dem gegenüber erfindungsgemäß ausgestaltete Verschaltung eines Dentalofens 10 ist in Fig. 2 dargestellt.

Unmittelbar an das Netz angeschlossen ist für jedes Heizelement 12a, 12b eine Einzelsteuerung 24 bzw. 26, die zusammen mit der Gesamtsteuerung 28 die Steuervorrichtung 22 bildet. Jede Einzelsteuerung 24 und 26 weist einen TRIAC 18 und einen Übertrager 20 auf, wobei insofern das betreffende Heizelement 12a bzw. 12b unmittelbar aus dem Netz versorgt wird, und dürfte insofern lediglich in dem betreffenden TRIAC bzw. dem Übertrager entstehen können, nicht hingegen in einem weiteren Schaltelement wie dem der Steuervorrichtung 22 gemäß Figur 1.

Die Gesamtsteuerung 28 dient dazu, das Verhältnis der abzugebenden Leistungen der Einzelsteuerungen 24 und 26 genau und gegebenenfalls auch nach Vorgabe des Benutzers zu steuern. Hierzu weist die Gesamtsteuerung 28 auch Anschlüsse für nie dargestellte Temperatursensoren, oder gegebenenfalls auch Stromsensoren auf, die die abgegebene Leistung der Einzelsteuerung 24 bzw. 26 erfassen, sodass auch insofern eine Auswertung möglich ist.

Es versteht sich, dass je über entsprechende Bedienelemente beispielsweise das Verhältnis der abgegebenen Heizelementen 12a bzw. 12b einstellbar ist, auch wenn dies in Fig. 2 nicht dargestellt ist.

Erfindungsgemäß ist es vorgesehen, die beiden Einzelsteuerungen und damit die Steuervorrichtung 22 so zu steuern, dass die Temperaturverteilung in der Heizkammer in der gewünschten Weise erzielt wird. Beispielsweise lässt sich ein vorgegebener Temperaturgrad einstellen, oder es ist möglich, durch schwächere Ansteuerung von oberen Heizelementen und stärkeren Ansteuerung von unteren Heizelementen der sich regelmäßig einstellenden Temperaturverteilung in einer Heizkammer entgegenzuwirken und so eine Vergleichmäßigung der Temperatur in der Heizkammer zu erreichen.

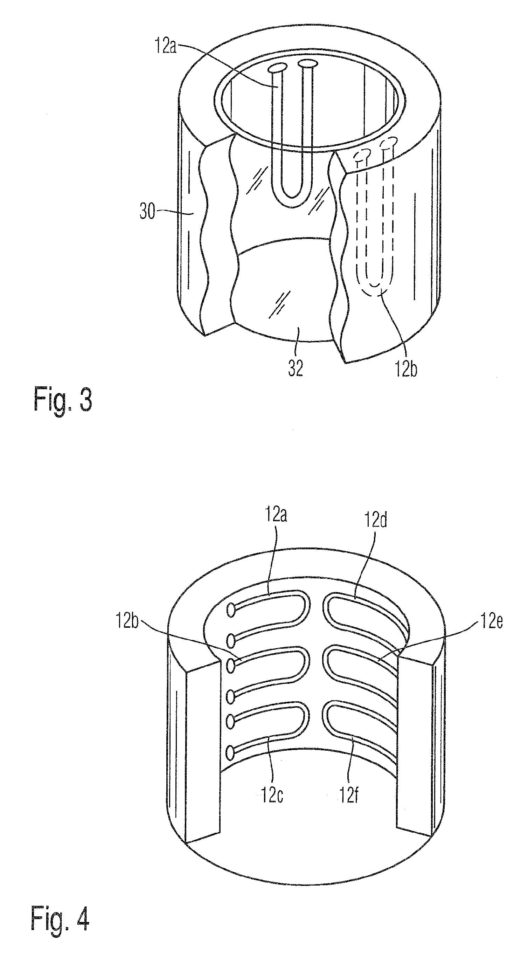

Aus Fig. 3 ist ersichtlich, in welcher Weise zwei Heizelemente 12a und 12b angeordnet sein können. Dort ist eine Heizkammer 30 vorgesehen, die an sich nach der Art eines flachen Hohlzylinders erstreckt und außen von einer Quarzglasscheibe 32 abgedeckt ist. In der Quarzglasscheibe erstrecken sich die Heizelemente 12a und 12b an einander gegenüberliegenden Stellen. Mit dieser Anordnung ist keine vertikale Temperaturschichtung, aber eine horizontale Temperaturverteilung möglich. Die Heizelemente erstrecken sich im Wesentlichen fingerförmig oder U-förmig, wie es an sich bekannt ist und durchtreten die Quarzglasscheibe 32 an ihren Anschlüssen.

Aus Fig. 4 ist eine modifizierte Ausgestaltung mit sechs Heizelementen 12a, 12b, 12c, 12d, 12e und 12f ersichtlich. In diesem Falle erstrecken sich die Heizelemente 12a bis 12f je teilkreisförmig und nehmen je etwa einen Halbkreis um die Heizkammer herum ein. Die Heizelemente 12a, 12b und 12c sind je übereinander angeordnet. Entsprechendes gilt für die Heizelemente 12d bis 12f.

Mit dieser Lösung ist es beispielsweise möglich, das Heizelement 12c stärker und das Heizelement 12a anzusteuern, um dem sich einstellenden Temperaturgradienten in der Heizkammer entgegenzuwirken.

Auch ist es möglich eine beliebige andere Temperaturverteilung in der Heizkammer zu erzielen, wenn dies erwünscht ist.

Während hier Dentalbrennöfen mit Ofenhauben dargestellt sind, die die Heizkammer aufnehmen und die Hub- oder schwenkbeweglich gegenüber einem Brennofen-Unterteil gelagert sind, das eine Auflagefläche für die Dentalkeramik bittet, versteht es sich, dass anstelle dessen auch Dentalbrennöfen mit Tür erfindungsgemäß ausgestaltet sein können. Auch dort lässt sich eine erwünschte Temperaturverteilung nach Belieben und nach Bedürfnissen des Benutzers einstellen.

## Patentansprüche

**1.** Dentalofen mit einer Heizkammer, mit wenigstens zwei die Heizkammer beaufschlagenden Heizelementen und einer mit den Heizelementen zusammenwirkenden Steuervorrichtung für die Spannungsversorgung der Heizelemente, **dadurch gekennzeichnet, dass** die Steuervorrichtung (22) mindestens zwei Heizelemente (12) separat mit Spannung versorgt und dass die Steuervorrichtung (22) die Leistungsabgabe mindestens eines Heizelements (12) an die Erfordernisse der Temperaturverteilung in der Heizkammer (30) anpasst.

**2.** Dentalofen nach Anspruch 1, **dadurch gekennzeichnet, dass** die Heizkammer (30) sich im Wesentlich als Hohlzylinder erstreckt und mindestens zwei Heizelemente (12) übereinander angeordnet und je getrennt von der Steuervorrichtung (22) steuerbar sind.

**3.** Dentalofen nach einem der vorhergehenden Ansprüche, **dadurch gekennzeichnet, dass** die Heizkammer (30) als Teil einer Ofenhaube ausgebildet und beim Schließen der Ofenhaube im Wesentlichen geschlossen ist.

**4.** Dentalofen nach einem der vorhergehenden Ansprüche, **dadurch gekennzeichnet, dass** die Heizelemente (12) im Bereich der Heizkammerwand verteilt angeordnet sind.

**5.** Dentalofen nach einem der vorhergehenden Ansprüche, **dadurch gekennzeichnet, dass** sich die Heizelemente (12) wenigstens teilweise entlang der Heizkammerwand in Umfangsrichtung der Heizkammerwand oder parallel zur Mittellängsachse der Heizkammerwand erstrecken.

**6.** Dentalofen nach einem der vorhergehenden Ansprüche, **dadurch gekennzeichnet, dass** die Heizelemente (12) der Heizkammer (30) eng benachbart als Heizspiralen sich ringförmig oder spiralig um die Heizkammer (30) erstrecken.

**7.** Dentalofen nach einem der vorhergehenden Ansprüche, **dadurch gekennzeichnet, dass** die Steuervorrichtung (22) mit mindestens einem Temperatursensor verbunden ist, der in der Heizkammer (30) dem Heizelement benachbart und/oder in der Heizkammer (30) von dem Heizelement beabstandet angeordnet ist.

**8.** Dentalofen nach einem der vorhergehenden Ansprüche, **dadurch gekennzeichnet, dass** Heizelemente (12) von der Steuervorrichtung (22) mit identischer oder höherer Leistung versorgt werden.

**9.** Dentalofen nach einem der vorhergehenden Ansprüche, **dadurch gekennzeichnet, dass** mit dem Sensor eine Temperatur von max. 1600°C messbar ist.

**10.** Dentalofen nach einem der vorhergehenden Ansprüche, **dadurch gekennzeichnet, dass** die Steuervorrichtung (22) für die Leistungsversorgung der Heizelemente (12) ein primär getaktetes Netzteil (16) aufweist, wobei insbesondere für jedes oder mehrere Heizelement ein separater Schaltkreis vorgesehen ist, welche von der Steuervorrichtung (22) gemeinsam steuerbar sind.

**11.** Dentalofen nach einem der vorhergehenden Ansprüche, **dadurch gekennzeichnet, dass** die Heizelemente (12) im Wesentlichen aus Molybdän-Siliziumdioxid (MOSi2) und/oder Silizium-Karbid (SiC) bestehen.

**12.** Dentalofen nach einem der vorhergehenden Ansprüche, **dadurch gekennzeichnet, dass** die Heizelemente (12) von Wärmedämmelementen umgeben sind, die sich an sich bekannter Weise die Heizkammer und die Heizelemente (12) umgebend erstrecken und dass insbesondere die Heizelemente (12) beabstandet und thermisch voneinander getrennt sind.
